(19) Europäisches Patentamt
European Patent Office
Office européen des brevets

(11) **EP 3 858 528 A1**

(12) **EUROPÄISCHE PATENTANMELDUNG**

(43) Veröffentlichungstag:
**04.08.2021 Patentblatt 2021/31**

(51) Int Cl.:
**B23F 9/02** (2006.01)      **B23F 9/10** (2006.01)
**B23F 17/00** (2006.01)     **B23F 19/00** (2006.01)
**B23F 15/00** (2006.01)     **F16H 55/08** (2006.01)
**B23F 21/02** (2006.01)     **B23F 21/22** (2006.01)

(21) Anmeldenummer: **20154642.1**

(22) Anmeldetag: **30.01.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **KlingeInberg GmbH**
**42499 Hückeswagen (DE)**

(72) Erfinder: **Schalaster, Rolf**
**42929 Wermelskirchen (DE)**

(74) Vertreter: **Heusch, Christian**
**Ant-IP GmbH**
**Kirchplatz 2**
**82387 Antdorf (DE)**

(54) **VERFAHREN ZUM HERSTELLEN EINER BIKONKAVEN UND BIKONVEXEN KEGELRADVERZAHNUNG**

(57)     Verfahren zum Herstellen eines Kegelrads, mit den Verfahrensschritten: Bereitstellen eines Werkzeugs zum Verzahnen eines Kegelradwerkstücks; Bereitstellen eines Kegelradwerkstücks; Drehantreiben des Werkzeugs und Zustellen des Werkzeugs zum Herstellen von Zähnen (8, 10) an dem Kegelradwerkstück, wobei durch das Werkzeug bikonkave Zähne (8) an dem Kegelradwerkstück hergestellt werden oder wobei durch das Werkzeug (24) bikonvexe Zähne (10) an dem Kegelradwerkstück hergestellt werden.

Fig. 1A

EP 3 858 528 A1

**Beschreibung**

Die vorliegende Erfindung betrifft ein Verfahren zum Herstellen eines Kegelrads und ein Verfahren zum Herstellen einer Laufverzahnung.

Spiralverzahnte Kegelradsätze bieten eine hohe Tragfähigkeit und Laufruhe. Aufgrund der Zahnform entstehen während der Leistungsübertragung Axialkräfte entlang der Rotationsachsen, die durch entsprechende Lagerungen abgestützt werden müssen. Weiter ist nicht jede Spiralverzahnung ohne Weiteres ziehbar, d.h. durch rein axiales Verschieben eines der Kegelräder mit dem jeweils zugeordneten Gegenrad in Eingriff zu bringen oder aus dem Zahneingriff zu lösen.

In bestimmten Anwendungsfällen sind jedoch Kegelradverzahnungen gefordert, die eine Übersetzung von Drehzahlen und Drehmomenten unter einem Achskreuzwinkel ermöglichen, ohne dabei hohe axiale Lasten oder drehrichtungsabhängig wechselnde Lasten entlang der jeweiligen Rotationsachsen der betreffenden Kegelradpaarung aus Rad und Ritzel zu erzeugen. Weiter kann eine Einbausituation eine Laufverzahnung bzw. Kegelradpaarung erfordern, die uneingeschränkt axial montierbar ist, d.h. ziehbar ist. Hierzu werden beispielsweise Zerol-Kreisbogenverzahnungen oder auch Geradverzahnungen nach dem Hypoflex-Verfahren der Firma Klingelnberg oder dem Coniflex-Verfahren der Firma Gleason eingesetzt.

Die Zerol-Kreisbogenverzahnung hat den Nachteil, dass in Abhängigkeit von der Drehrichtung unterschiedliche Kontaktbedingungen vorliegen. Eine Geradverzahnung nach dem Hypoflex-Verfahren kann nur kontinuierlich teilend hergestellt werden. Eine Geradverzahnung, die nach dem Coniflex-Verfahren hergestellt ist, weist einen gekrümmten Zahnfuß auf.

Die vorgenannten Verzahnungen können durch Teilwälzschleifen hartfeinbearbeitet werdem, wobei das Schleifwerkzeug Pendelbewegungen entlang der zu schleifenden Zahnflanken ausführt. Dabei ist die erreichbare Genauigkeit für die geschliffenen Zahnflanken von der Anzahl der Pendelbewegungen abhängig.

Vor diesem Hintergrund liegt der Erfindung die technische Problemstellung zugrunde, ein Verfahren zum Herstellen eines Kegelrads und ein Verfahren zum Herstellen einer Laufverzahnung anzugeben, mit denen sich ein Kegelrad und eine Laufverzahnung herstellen lassen, welche die voranstehend beschriebenen Nachteile nicht oder zumindest in geringerem Maße aufweisen. Insbesondere soll ein Verfahren zum einfachen und kostengünstigen Herstellen einer Laufverzahnung angegeben werden, wobei die Laufverzahnung während einer Leistungsübertragung lediglich geringe Axialkräfte bewirkt, einfach montierbar ist und zudem für eine einfache und kostengünstige Hartfeinbearbeitung geeignet ist. Weiter soll ein Verfahren zum einfachen und kostengünstigen Herstellen eines Kegelrads für eine solche Laufverzahnung angegeben werden.

Die voranstehend beschriebene, technische Problemstellung wird jeweils gelöst durch die unabhängigen Ansprüche. Weitere Ausgestaltungen der Erfindung ergeben sich aus den abhängigen Ansprüchen und der nachstehenden Beschreibung.

Gemäß einem ersten Aspekt betrifft die Erfindung ein Verfahren zum Herstellen eines Kegelrads, mit den Verfahrensschritten: Bereitstellen eines Werkzeugs zum Verzahnen eines Kegelradwerkstücks; Bereitstellen eines Kegelradwerkstücks; Drehantreiben des Werkzeugs und Zustellen des Werkzeugs zum Herstellen von Zähnen an dem Kegelradwerkstück, wobei durch das Werkzeug bikonkave Zähne am dem Kegelradwerkstück hergestellt werden oder wobei durch das Werkzeug bikonvexe Zähne an dem Kegelradwerkstück hergestellt werden.

Ein solches Kegelrad kann als Teil einer Laufverzahnung verwendet werden, die eine Paarung aus einem Kegelrad mit bikonvexen Zähnen und einem Kegelrad mit bikonkaven Zähnen ist.

Wenn vorliegend von einer Laufverzahnung gesprochen wird, so handelt es sich dabei um eine Kegelradpaarung, die zur Übertragung und Übersetzung von Drehzahlen und Drehmomenten unter einem Achskreuzwinkel eingerichtet ist, wobei während der Übertragung und Übersetzung für beide Drehrichtungen konkave Zahnflanken eines ersten, bikonkave Zähne aufweisenden Kegelrads mit konvexen Zahnflanken eines zweiten, bikonvexe Zähne aufweisenden Kegelrads abwälzen. Ein Kegelrad der Laufverzahnung kann als Ritzel und ein Kegelrad der Laufverzahnung kann als Rad bzw. Tellerrad bezeichnet werden.

Die Paarung einer bikonkaven Zahnform mit einer bikonvexen Zahnform hat den Vorteil, dass für beide Drehrichtungen gleiche Kontaktbedingungen vorliegen.

Die Zähne der Laufverzahnung können einen Schrägungswinkel aufweisen oder keinen Schrägungswinkel aufweisen.

Soweit kein Schrägungswinkel vorgesehen ist, sind die Eigenschaften der Laufverzahnung denen einer Geradverzahnung vergleichbar, d.h. es treten während der Drehübertragung geringe Axialkräfte auf und die Laufverzahnung ist in einfacher Weise axial montierbar bzw. ziehbar.

Wenn vorliegend von einem Zahn des Kegelrads mit bikonkaver Form gesprochen wird, so hat der Zahn eine erste Flanke, deren Flankenlinie in Richtung einer zweiten Flanke desselben Zahns nach innen gewölbt ist. Weiter ist eine Flankenlinie der zweiten Flanke des Zahns mit bikonkaver Form in Richtung der ersten Flanke desselben Zahns nach innen gewölbt ist. Im Vergleich zu einer virtuellen bzw. gedachten geradlinigen Verbindung eines zehen- und fersenseitigen Endpunkts der jeweiligen konkaven Flankenlinie, ist eine jeweilige konkave Flankenlinie daher in Richtung der jeweils anderen konkaven Flankenlinie das Zahns gewölbt. Eine solche Flankenlinie kann beispielsweise auf Höhe bzw. entlang des mittleren Teilkegels eines Kegelrads von der Ferse bis zur Zehe eines jeweiligen Zahns verlaufen. Insgesamt sind die Flanken eines Zahns entlang einer Flankenrichtung betrachtet, also entlang einer Zahnbreite, konkav geformt.

Wenn vorliegend von einem Zahn des Kegelrads mit bikonvexer Form gesprochen wird, so hat der Zahn eine erste Flanke, deren Flankenlinie weg weisend von einer zweiten Flanke desselben Zahns nach außen gewölbt ist. Weiter ist eine Flankenlinie der zweiten Flanke des Zahns mit bikonvexer Form weg weisend von der ersten Flanke desselben Zahns nach außen gewölbt. Im Vergleich zu einer virtuellen bzw. gedachten geradlinigen Verbindung eines zehen- und fersenseitigen Endpunkts der jeweiligen konvexen Flankenlinie, ist eine jeweilige konvexe Flankenlinie daher weg weisend von der jeweils anderen konvexen Flankenlinie das Zahns gewölbt. Eine solche Flankenlinie kann beispielsweise auf Höhe bzw. entlang des mittleren Teilkegels eines Kegelrads von der Ferse bis zur Zehe eines jeweiligen Zahns verlaufen. Insgesamt sind die Flanken eines Zahns entlang einer Flankenrichtung betrachtet, also entlang einer Zahnbreite, konvex geformt.

Das Werkzeug kann ein Stabmesserkopf sein, wobei der Stabmesserkopf Außenschneiden aufweist und wobei mittels der Außenschneiden des Stabmesserkopfs die bikonkaven Zähne an dem Kegelradwerkstück hergestellt werden oder wobei der Stabmesserkopf Innenschneiden aufweist und wobei mittels der Innenschneiden des Stabmesserkopfs die bikonvexen Zähne an dem Kegelradwerkstück hergestellt werden.

Insbesondere kann das Kegelrad mit einem Stabmesserkopf hergestellt werden, der üblicherweise zum Herstellen von einzelteilend oder kontinuierlich gefertigten Spiralverzahnungen zum Einsatz kommt. Wird das Kegelrad mit einem Stabmesserkopf hergestellt, dessen Durchmesser wesentlich größer ist als die mittlere Teilkegellänge des Kegelrads, ist die bikonkave oder bikonvexe Zahnform der Zähne des Kegelrads mit bloßem Auge nicht oder nur schwer erkennbar, so dass das hergestellte Kegelrad einem geradverzahnten Kegelrad vergleichbar ist.

Demnach kann das bikonkave oder bikonvexe Kegelrad mit den Eigenschaften eines geradverzahnten Kegelrads hergestellt werden, wobei das erfindungsgemäße Kegelrad kostengünstig und effizient mit bestehenden Stabmesserköpfen hergestellt werden kann, die auch zum Herstellen von Spiralverzahnungen eingesetzt werden. Es ist daher kein eigens für den vorliegenden Anwendungsfall neu zu konstruierendes Werkzeug erforderlich. Die Stabmesser eines Messerkopfs müssen lediglich entsprechend dem erfindungsgemäß herzustellenden Kegelrad geschliffen werden.

Ein weiterer Vorteil ist, dass zur Hartfeinbearbeitung ebenfalls die für Spiralverzahnungen bekannten Mittel eingesetzt werden können, so dass insbesondere für eine einzelteilende Herstellung des Kegelrads eine Hartfeinbearbeitung als Schleifbearbeitung mit einer Topfschleifscheibe erfolgen kann. Hierbei kann die Profilform exakt entsprechend der vorgegebenen Sollgeometrie abgebildet werden, während das eingangs erwähnte Teilwälzschleifen mit Pendelbewegung lediglich eine Annäherung der Profilform ermöglicht.

Es kann vorgesehen sein, dass bikonkave Zähne des Kegelrads ausschließlich mit Außenschneiden des Stabmesserkopfs hergestellt werden oder bikonvexe Zähne des Kegelrads ausschließlich mit Innenschneiden des Stabmesserkopfs hergestellt werden.

Wenn vorliegend von einer Außenschneide gesprochen wird, so handelt es sich um diejenige Schneide, die die Endgeometrie der konkaven Flanke erzeugt. Wenn vorliegend von einer Innenschneide gesprochen wird, so handelt es sich um diejenige Schneide, die die Endgeometrie der konvexen Flanke erzeugt.

Eine Innenschneide kann an einem Stabmesser vorgesehen sein, das ein sogenannter Innenschneider ist. Ein solches Stabmesser hat demnach eine Innenschneide, die zum Herstellen der Endgeometrie der konvexen Flanke vorgesehen ist. Dies bedeutet jedoch nicht, dass während der Fertigung einer Zahnlücke ausschließlich die Innenschneide des Innenschneiders Material von dem betreffenden Werkstück abhebt. Vielmehr weist ein solcher Innenschneider in bekannter Weise Nebenschneiden auf, die ebenfalls Material von dem Werkstück abheben können, also die Lücke räumen können, jedoch nicht die Endgeometrie der konvexen Flanke erzeugen.

Eine Außenschneide kann an einem Stabmesser vorgesehen sein, das ein sogenannter Außenschneider ist. Ein solches Stabmesser hat demnach eine Außenschneide, die zum Herstellen der Endgeometrie der konkaven Flanke vorgesehen ist. Dies bedeutet jedoch nicht, dass während der Fertigung einer Zahnlücke ausschließlich die Außenschneide des Außenschneiders Material von dem betreffenden Werkstück abhebt. Vielmehr weist ein solcher Außenschneider in bekannter Weise Nebenschneiden auf, die ebenfalls Material von dem Werkstück abheben können, also die Lücke räumen können, jedoch nicht die Endgeometrie der konkaven Flanke erzeugen. Die Begriffe Messerkopf und Stabmesserkopf werden im vorliegenden Text synonym verwendet.

Zur Fertigung eines Kegelrads mit bikonkaven Zähnen kann beispielsweise ein Messerkopf verwendet werden, der ausschließlich mit Außenschneidern bestückt ist.

Zur Fertigung eines Kegelrads mit bikonvexen Zähnen kann beispielsweise ein Messerkopf verwendet werden, der ausschließlich mit Innenschneidern bestückt ist.

Es versteht sich, dass ebenfalls ein Messerkopf verwendet werden kann, der sowohl Außenschneider als auch Innenschneider aufweist, und insbesondere zur Herstellung sowohl der bikonkaven Zähne als auch der bikonvexen Zähne geeignet ist.

Es kann vorgesehen sein, dass ein Stabmesser sowohl eine Innenschneide als auch eine Außenschneide aufweist. In diesem Fall spricht man von sogenannten Twin-Blades, die Innenschneider und Außenschneider in einem Stabmesser vereinen.

Das Kegelradwerkstück kann einzelteilend mit dem Stabmesserkopf bearbeitet werden, wobei die beiden Flanken eines jeweiligen bikonkaven Zahns des Kegelrads mit Außenschneiden des Stabmesserkopfs hergestellt werden oder wobei die beiden Flanken eines jeweiligen bikonvexen Zahns des Kegelrads mit Innenschneiden des Stabmesserkopfs hergestellt werden.

Einzelteilend bedeutet, dass die Zähne nacheinander hergestellt werden, wobei nach jedem Eintauchen und Herstellen einer Lücke eine inkrementelle Rotation des herzustellenden Kegelrads um eine Zahnteilung erfolgt. Beim Einzelteilen im Semi-Completing wird zweimal in eine Lücke getaucht.

Es kann vorgesehen sein, dass das Kegelradwerkstück kontinuierlich teilend mit dem Stabmesserkopf bearbeitet wird, wobei die beiden Flanken eines jeweiligen bikonkaven Zahns des Kegelrads mit Außenschneiden des Stabmesserkopfs hergestellt werden oder wobei die beiden Flanken eines jeweiligen bikonvexen Zahns des Kegelrads mit Innenschneiden des Stabmesserkopfs hergestellt werden.

Kontinuierlich teilend bedeutet, dass der Stabmesserkopf und das zu fertigende Kegelrad eine gekoppelte Bewegung ausführen, wobei aufeinanderfolgende Messer oder Messergruppen aufeinanderfolgende Zähne bzw. Zahnlücken bearbeiten. So werden je Messerkopfumdrehung eine Mehrzahl aufeinanderfolgender Zahnlücken eines Kegelrads bearbeitet.

Das Werkzeug kann ein Schleifwerkzeug sein, wobei das Schleifwerkzeug eine äußere Schleiffläche aufweist und wobei mittels der äußerem Schleiffläche des Schleifwerkzeugs die bikonkaven Zähne an dem Kegelradwerkstück hergestellt werden oder wobei das Schleifwerkzeug eine innere Schleiffläche aufweist und wobei mittels der inneren Schleiffläche des Schleifwerkzeugs die bikonvexen Zähne an dem Kegelradwerkstück hergestellt werden.

Das Schleifwerkzeug kann eine Topfschleifscheibe sein.

Es kann daher vorgesehen sein, dass das Kegelrad durch Schleifwerkzeuge oder ein Schleifwerkzeug hergestellt wird. So kann das Kegelrad durch Fertigschleifen, also ohne eine vorhergehende Fräsbearbeitung bereitgestellt werden. Dabei kann beispielsweise ein unverzahnter Rohling unmittelbar und ausschließlich durch eine Schleifbearbeitung verzahnt werden, um das Kegelrad bereitzustellen.

Wenn vorliegend davon gesprochen wird, dass ein Rohling bzw. ein Kegelradwerkstück zur Herstellung eines Kegelrads bereitgestellt wird, so kann es sich dabei um einen unverzahnten oder einen bereits vorverzahnten Rohling handeln, der durch spanabhebende Fräsund/oder Schleifbearbeitung, d.h. durch eine Bearbeitung mit geometrisch bestimmter und/oder unbestimmter Schneide, zu einem Kegelrad der Laufverzahnung weiterverarbeitet wird.

Ein unverzahnter Rohling weist dabei keine Zähne oder Zahnlücken auf, so dass die Verzahnung noch vollständig aus dem Rohling herausgearbeitet werden muss.

Ein vorverzahnter Rohling kann als Gussteil, Schmiedeteil oder Fräsbauteil bereits vorgeformte Zähne und Zahnlücken haben, die der finalen Zahnform angenähert sind, aber noch ein Aufmaß dazu aufweisen. Ein solcher vorverzahnter Rohling kann dann durch eine Fräs- und/oder Schleifbearbeitung weiterbearbeitet werden, um die geforderte Zahnform des herzustellenden Kegelrads zu erzeugen.

Insbesondere kann das Kegelrad durch Fertigschleifen eines unverzahnten Rohlings (Kegelradwerkstücks) hergestellt worden sein.

Insbesondere kann das Kegelrad durch Fertigschleifen eines durch ein Schmiede- oder Gussverfahren vorverzahnten Rohlings (Kegelradwerkstücks) hergestellt worden sein.

Insbesondere kann das Kegelrad durch Schleifen eines durch Verzahnungsfräsen vorverzahnten Rohlings (Kegelradwerkstücks) hergestellt worden sein.

Es kann vorgesehen sein, dass das Kegelradwerkstück im Semi-Completing Verfahren bearbeitet wird. Semi-Completing bedeutet, dass in einer ersten Zustellung eine erste Flanke fertigbearbeitet wird und ein einer zweiten Zustellung eine zweite Flanke fertigbearbeitet wird. Man spricht dabei auch von einem Zwei-Schnitt-Verfahren. Dabei bilden für den Fall der bikonvexen Zahnform Innenschneiden des Stabmesserkopfs die Form der linken konvexen Flanken in einer ersten Maschineneinstellung ab und die Form der rechten konvexen Flanken in einer zweiten Maschineneinstellung ab. Alternativ bilden für den Fall der bikonkaven Zahnform Außenschneiden des Stabmesserkopfs die Form der linken konkaven Flanken in einer ersten Maschineneinstellung ab und die Form der rechten konkaven Flanken in einer zweiten Maschineneinstellung ab.

Dies gilt gleichermaßen für ein Semi-Completing mit einer Topfschleifscheibe. Dabei bildet für den Fall der bikonvexen Zahnform eine innere Schleiffläche der Topfschleifscheibe die Form der linken konvexen Flanken in einer ersten Maschineneinstellung ab und die Form der rechten konvexen Flanken in einer zweiten Maschineneinstellung ab. Alternativ bildet für den Fall der bikonkaven Zahnform eine äußere Schleiffläche der Topfschleifscheibe die Form der linken konkaven Flanken in einer ersten Maschineneinstellung ab und die Form der rechten konkaven Flanken in einer zweiten Maschineneinstellung ab.

Das erste und das zweite Kegelrad können tauchend, also im Formverfahren, oder generierend, also im Wälzverfahren, hergestellt werden.

Es kann vorgesehen sein, dass Flanken der Zähne des Kegelrads einen Krümmungsradius aufweisen, wobei gilt, dass $R = \sqrt{2} * d_m * n$; mit R als Krümmungsradius einer konkaven Flanke oder als Krümmungsradius einer konvexen Flanke, mit $d_m$ als mittlerem Teilkreisdurchmesser des Kegelrads und mit n = {1; 2; 3; 4; 5; 6}.

Es kann vorgesehen sein, dass Flanken der Zähne des Kegelrads einen Krümmungsradius aufweisen, der wenigstens dem Doppelten, dem Dreifachen oder dem Vierfachen einer mittleren Teilkegellänge des Kegelrads entspricht, insbesondere höchstens dem Sechsfachem der mittleren Teilkegellänge des Kegelrads entspricht.

Weiter kann vorgesehen sein, dass das Werkzeug zum Herstellen des Kegelrads einen Durchmesser aufweist, wobei gilt, dass $D = 2 * \sqrt{2} * d_m * n$; mit D als Durchmesser des Werkzeugs, mit $d_m$ als mittlerem Teilkreisdurchmesser des Kegelrads und mit n = {1; 2; 3; 4; 5; 6}.

Gemäß einer weiteren Ausgestaltung des Verfahrens kann vorgesehen sein, dass das Werkzeug einen Durchmesser aufweist, der wenigstens dem Vierfachen, dem Sechsfachen oder dem Achtfachen einer mittleren Teilkegellänge des Kegelradwerkstücks entspricht, insbesondere höchstens dem Zwölffachen einer mittleren Teilkegellänge des Kegelradwerkstücks entspricht. Demnach kann der Durchmesser eines zur Herstellung des Kegelrads verwendeten Werkzeugs z.B. größer oder gleich der Vierfachen mittleren Teilkegellänge des Kegelrads sein. Somit wird das Kegelrad mit einem Werkzeug hergestellt, dessen Durchmesser wesentlich größer ist als die mittlere Teilkegellänge des Kegelrads. Die bikonkave oder bikonvexe Zahnform eines solchen Kegelrads ist mit bloßem Auge nicht oder nur schwer erkennbar, so dass das Kegelrad mit einem Geradverzahnten Kegelrad vergleichbar ist.

Nach einer weiteren Ausgestaltung des Verfahrens ist vorgesehen, dass Rechtsflanken der Zähne des Kegelradwerkstücks mit ersten Maschineneinstellungen einer CNC-gesteuerten Werkzeugmaschine gefertigt werden und Linksflanken der Zähne des Kegelradwerkstücks mit zweiten Maschineneinstellungen der CNC-gesteuerten Werkzeugmaschine gefertigt werden wobei sich die ersten Maschineneinstellungen und die zweiten Maschineneinstelllungen insbesondere durch einen Vorzeichenwechsel eines Schwenkwinkels einer Werkzeug- oder Werkstückschwenkachse unterscheiden. Insbesondere kann hier von gespiegelten Maschineneinstellungen gesprochen werden, da sich die Maschineneinstellungen für die linken und rechten Flanken im Wesentlichen durch eine Spiegelung bzw. einen Vorzeichenwechsel eines C-Achs-Schwenkwinkels voneinander unterscheiden. Es versteht sich, dass das Werkzeug entsprechend nachgeführt wird, wobei insbesondere eine Verschiebung des Werkzeugs in einer Y-Richtung stattfindet.

Gemäß einem zweiten Aspekt betrifft die Erfindung ein Verfahren zum Herstellen einer Laufverzahnung, wobei die Laufverzahnung ein erstes Kegelrad und ein zweites Kegelrad aufweist, und wobei Zähne des ersten Kegelrads eine bikonkave Form haben und Zähne des zweiten Kegelrads eine bikonvexe Form haben, mit den Verfahrensschritten: Herstellen des ersten Kegelrads durch Bereitstellen eines Werkzeugs zum Verzahnen eines Kegelradwerkstücks; Bereitstellen eines ersten Kegelradwerkstücks; Drehantreiben des Werkzeugs und Zustellen des Werkzeugs zum Herstellen von Zähnen an dem ersten Kegelradwerkstück, wobei bikonkave Zähne am dem ersten Kegelradwerkstück hergestellt werden; und Herstellen des zweiten Kegelrads durch Bereitstellen eines Werkzeugs zum Verzahnen eines Kegelradwerkstücks; Bereitstellen eines zweiten Kegelradwerkstücks; Drehantreiben des Werkzeugs und Zustellen des Werkzeugs zum Herstellen von Zähnen an dem zweiten Kegelradwerkstück, wobei bikonkave Zähne am dem zweiten Kegelradwerkstück hergestellt werden.

Das erste und das zweite Kegelrad der Laufverzahnung können gemäß dem zuvor beschriebenen erfindungsgemäßen Verfahren zum Herstellen eines Kegelrads hergestellt werden.

Das erste Kegelrad kann einzelteilend mit einem Stabmesserkopf hergestellt worden sein, wobei die beiden Flanken eines jeweiligen bikonkaven Zahns des ersten Kegelrads mit Außenschneiden des Stabmesserkopfs hergestellt worden sind. Der Stabmesserkopf kann austauschbare Stabmesser haben, wobei jedes der Stabmesser eine Außenschneide hat. Es kann demnach vorgesehen sein, dass die bikonkaven Zähne ausschließlich mit Außenschneiden eines Stabmesserkopfs hergestellt worden sind.

Das zweite Kegelrad kann einzelteilend mit einem Stabmesserkopf hergestellt worden sein, wobei die beiden Flanken eines jeweiligen bikonvexen Zahns des zweiten Kegelrads mit Innenschneiden des Stabmesserkopfs hergestellt worden sind. Der Stabmesserkopf kann austauschbare Stabmesser haben, wobei jedes der Stabmesser eine Innenschneide hat. Es kann demnach vorgesehen sein, dass die bikonvexen Zähne ausschließlich mit Innenschneiden eines Stabmesserkopfs hergestellt worden sind.

Das erste Kegelrad und das zweite Kegelrad können mit dem gleichen Messerkopf hergestellt worden sind, insbesondere mit demselben Messerkopf hergestellt worden sind. Ein solcher Messerkopf für das Einzelteilverfahren hat austauschbare Stabmesser wobei jedes der Stabmesser eine Innen- und eine Außenschneide hat oder eine Gruppe erster Stabmesser Innenschneiden und eine Gruppe zweiter Stabmesser Außenschneiden hat. Das Einzelteilen ermöglicht eine besondere effiziente Vorverzahnung wobei eine Hartfeinbearbeitung insbesondere durch eine Schleifbearbeitung mit einer Topfschleifscheibe erfolgen kann.

Das erste und das zweite Kegelrad können durch Einzelteilen im Semi-Completing Verfahren hergestellt worden sein. Dabei bildet die Einhüllende der Innenschneiden eines Messerkopfs die Form der linken konvexen Flanken in einer ersten Maschineneinstellung ab und die Form der rechten konvexen Flanken in einer zweiten Maschineneinstellung ab. Insbesondere kann hier von gespiegelten Maschineneinstellungen gesprochen werden, da sich die Maschineneinstellungen für die linken und rechten Flanken im Wesentlichen durch eine Spiegelung bzw. einen Vorzeichenwechsel eines C-Achs-Schwenkwinkels voneinander unterscheiden. Es versteht sich, dass das Werkzeug entsprechend nachgeführt wird, wobei insbesondere eine Verschiebung des Messerkopfs in Y-Richtung stattfindet.

Weiter bildet die Einhüllende die Außenschneiden eines weiteren oder desselben Messerkopfs die Form der linken konkaven Flanken in einer dritten Maschineneinstellung ab und die Form der rechten konkaven Flanken in einer vierten Maschineneinstellung ab. Auch kann hier von gespiegelten Maschineneinstellungen gesprochen werden, da sich die Maschineneinstellungen für die linken und rechten Flanken im Wesentlichen durch eine Spiegelung bzw. einen Vorzeichenwechsel eines C-Achs-Schwenkwinkels voneinander unterscheiden. Es versteht sich, dass das Werkzeug entsprechend nachgeführt wird, wobei insbesondere eine Verschiebung des Messerkopfs in Y-Richtung stattfindet.

Es kann vorgesehen sein, dass das erste Kegelrad kontinuierlich teilend mit einem ersten Stabmesserkopf hergestellt worden ist, wobei die beiden Flanken eines jeweiligen bikonkaven Zahns des ersten Kegelrads mit Außenschneiden des ersten Stabmesserkopfs hergestellt worden sind, und das zweite Kegelrad kontinuierlich teilend mit einem zweiten Stabmesserkopf hergestellt worden ist, wobei die beiden Flanken eines jeweiligen bikonvexen Zahns des zweiten Kegelrads mit Innenschneiden des zweiten Stabmesserkopfs hergestellt worden sind, wobei der erste Stabmesserkopf eine von dem zweiten Stabmesserkopf abweichende Steigung aufweist.

Das kontinuierliche Teilverfahren kann ebenfalls als Semi-Completing Verfahren ausgestaltet sein, so dass das erste und zweite Kegelrad kontinuierlich teilend im Semi-Completing Verfahren hergestellt sein können.

Das erste Kegelrad und/oder das zweite Kegelrad können durch Schleifen hergestellt worden sein. Das erste Kegelrad und/oder das zweite Kegelrad können durch Fertigschleifen hergestellt worden sein. Das erste Kegelrad und/oder das zweite Kegelrad können nach einem Vorverzahnen gehärtet und anschließend geschliffen worden sein.

Das erste Kegelrad und das zweite Kegelrad können mit dem gleichen Schleifwerkzeug hergestellt worden sind, insbesondere mit demselben Schleifwerkzeug hergestellt worden sind. Das erste Kegelrad und das zweite Kegelrad können mit unterschiedlichen Schleifwerkzeugen hergestellt worden sein.

Es kann vorgesehen sein, dass ein Werkzeug zum Herstellen des ersten und/oder zweiten Kegelrads, wie ein zuvor beschriebener Messerkopf und/oder ein zuvor beschriebenes Schleifwerkzeug, einen Durchmesser aufweist, wobei gilt, dass $D = 2 * \sqrt{2} * d_m * n$; mit D als Durchmesser des Werkzeugs, mit $d_m$ als mittlerem Teilkreisdurchmesser des ersten Kegelrads oder als mittlerem Teilkreisdurchmesser des zweiten Kegelrads und mit n = {1; 2; 3; 4; 5; 6}.

Dabei kann vorgesehen sein, dass ein Werkzeug mit einem Durchmesser D angegeben wird, der sich entsprechend der voranstehend genannten Formel auf den Teilkreisdurchmesser des ersten Kegelrads bezieht, wobei dieses Werkzeug zur Herstellung des ersten Kegelrads und des zweiten Kegelrads verwendet wird.

Alternativ kann vorgesehen sein, dass ein Werkzeug mit einem Durchmesser D angegeben wird, der sich entsprechend der voranstehend genannten Formel auf den Teilkreisdurchmesser des zweiten Kegelrads bezieht, wobei dieses Werkzeug zur Herstellung des ersten Kegelrads und des zweiten Kegelrads verwendet wird.

Alternativ kann vorgesehen sein, dass das erste Kegelrad mit einem ersten Werkzeug hergestellt wird und das zweite Kegelrad mit einem zweiten Werkzeug hergestellt wird.

Hierbei kann vorgesehen sein, dass der erste Werkzeug einen Durchmesser D aufweist, der sich entsprechend der voranstehend genannten Formel auf den Teilkreisdurchmesser des ersten Kegelrads bezieht, und dass das zweite Werkzeug einen Durchmesser D aufweist, der sich entsprechend der voranstehend genannten Formel auf den Teilkreisdurchmesser des ersten Kegelrads bezieht.

Alternativ kann vorgesehen sein, dass das erste Werkzeug einen Durchmesser D aufweist, der sich entsprechend der voranstehend genannten Formel auf den Teilkreisdurchmesser des zweiten Kegelrads bezieht und dass das zweite Werkzeug einen Durchmesser D aufweist, der sich entsprechend der voranstehend genannten Formel auf den Teilkreisdurchmesser des zweiten Kegelrads bezieht.

Alternativ kann vorgesehen sein, dass das erste Werkzeug einen Durchmesser D aufweist, der sich entsprechend der voranstehend genannten Formel auf den Teilkreisdurchmesser des ersten Kegelrads bezieht und dass das zweite Werkzeug einen Durchmesser D aufweist, der sich entsprechend der voranstehend genannten Formel auf den Teilkreisdurchmesser des zweiten Kegelrads bezieht.

Alternativ kann vorgesehen sein, dass das erste Werkzeug einen Durchmesser D aufweist, der sich entsprechend der voranstehend genannten Formel auf den Teilkreisdurchmesser des zweiten Kegelrads bezieht und dass das zweite Werkzeug einen Durchmesser D aufweist, der sich entsprechend der voranstehend genannten Formel auf den Teilkreisdurchmesser des ersten Kegelrads bezieht.

Es kann vorgesehen sein, dass das erste und das zweite Werkzeug den gleichen Durchmesser aufweisen.

Es kann vorgesehen sein, dass die Laufverzahnung ein positives Verdrehflankenspiel hat.

Insbesondere hat die Laufverzahnung einen Achskreuzwinkel, ausgewählt aus einem Bereich von 75° bis 105°. Mit anderen Worten beträgt der Achskreuzwinkel der Laufverzahnung beispielsweise 90°+/-15°.

Nachfolgend wird die Erfindung anhand einer Ausführungsbeispiele darstellenden Zeichnung näher beschrieben. Es zeigen jeweils schematisch:

Fig. 1A     eine Laufverzahnung in einer perspektivischen Ansicht;

Fig. 1B     einen bikonkaven Zahn eines ersten Kegelrads der Laufverzahnung aus Fig. 1A in einer perspektivischen Ansicht;

Fig. 1C     einen bikonvexen Zahn eines zweiten Kegelrads der Laufverzahnung aus Fig. 1A in einer perspektivischen Ansicht;

Fig. 2A     eine weitere Laufverzahnung in einer perspektivischen Ansicht;

Fig. 2B     einen bikonvexen Zahn eines ersten Kegelrads der Laufverzahnung aus Fig. 2A in einer perspektivischen Ansicht;

Fig. 2C     einen bikonkaven Zahn eines zweiten Kegelrads der Laufverzahnung aus Fig. 2A in einer perspektivischen Ansicht;

Fig. 3A     eine erste Maschineneinstellung zum Herstellen eines Kegelrads einer Laufverzahnung;

Fig. 3B     eine zweite Maschineneinstellung zum Herstellen eines Kegelrads einer Laufverzahnung;

Fig. 4     einen Stabmesserkopf mit einem Kegelrad einer Laufverzahnung;

Fig. 5     ein Ablaufdiagramm eines erfindungsgemäßen Verfahrens zum Herstellen eines Kegelrads;

Fig. 6     ein Ablaufdiagramm eines erfindungsgemäßen Verfahrens zum Herstellen einer Laufverzahnung;

Fig. 7     eine Topfschleifscheibe mit einem Kegelrad einer Laufverzahnung.

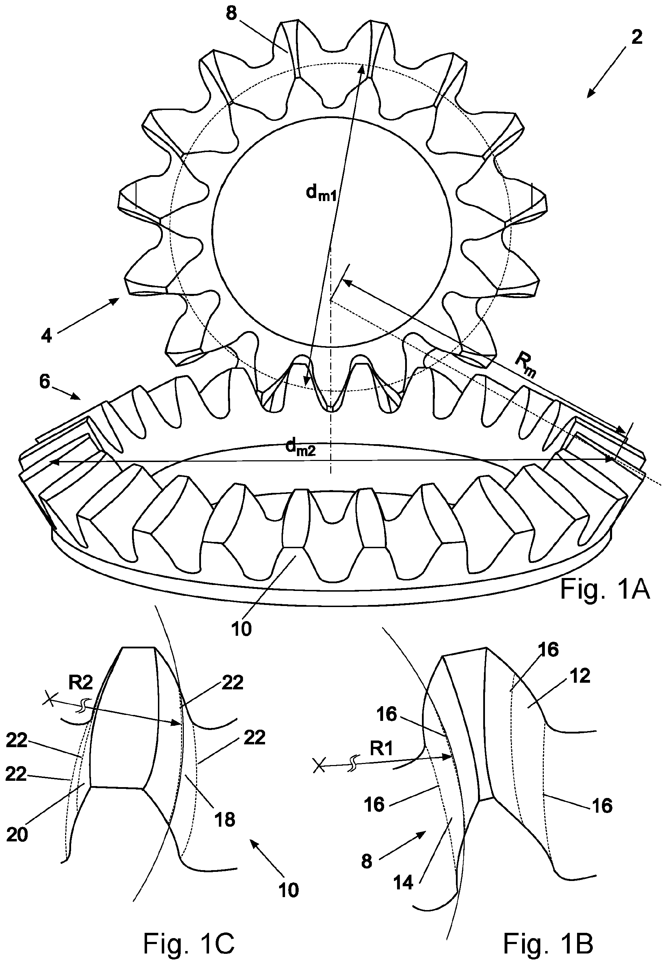

Fig. 1A zeigt eine Laufverzahnung 2, hergestellt nach dem erfindungsgemäßen Verfahren zum Herstellen einer Laufverzahnung. Die Laufverzahnung 2 hat ein erstes Kegelrad 4 und ein zweites Kegelrad 6, jeweils hergestellt dem erfindungsgemäßen Verfahren zum Herstellen eines Kegelrads. Die Laufverzahnung 2 ist ein Winkelgetriebe 2 und dazu eingerichtet, Drehzahlen und Drehmomente unter einem Achskreuzwinkel zu übertragen. Dabei kämmen Zähne 8 des ersten Kegelrads 4 mit Zähnen 10 des zweiten Kegelrads 6.

Der Achskreuzwinkel der Laufverzahnung beträgt 90°.

Die Zähne 8 des ersten Kegelrads 4 haben eine bikonkave Form. Die Zähne 10 des zweiten Kegelrads 6 haben eine bikonvexe Form. Das erste Kegelrad 4 ist ein Ritzel 4. Das zweite Kegelrad 6 ist ein Tellerrad 6.

In Fig. 1B ist ein einzelner bikonkaver Zahn 8 des ersten Kegelrads 4 vergrößert dargestellt. Die Flanken 12, 14 eines solchen Zahns 8 weisen einen Krümmungsradius R1 auf, der wenigstens dem Doppelten, dem Dreifachen oder dem Vierfachen einer mittleren Teilkegellänge $R_m$ des ersten Kegelrads 4 und des zweiten Kegelrads 6 entspricht, wie exemplarisch für eine Flankenlinie 16 gezeigt, insbesondere höchstens dem Sechsfachem der mittleren Teilkegellänge $R_m$ des ersten Kegelrads 4 und des zweiten Kegelrads 6 entspricht. Zur Veranschaulichung der konkaven Flankenform sind mehrere Flankenlinien 16 als punktierte Linien eingezeichnet.

In Fig. 1C ist ein einzelner bikonvexer Zahn 10 des zweiten Kegelrads 6 vergrößert dargestellt. Die Flanken 18, 20 eines solchen Zahns 10 weisen einen Krümmungsradius R2 auf, der wenigstens dem Doppelten, dem Dreifachen oder dem Vierfachen einer mittleren Teilkegellänge $R_m$ des ersten Kegelrads 4 und des zweiten Kegelrads 6 entspricht, wie exemplarisch für eine Flankenlinie 22 gezeigt, insbesondere höchstens dem Sechsfachem der mittleren Teilkegellänge $R_m$ des ersten Kegelrads 4 und des zweiten Kegelrads 6 entspricht. Zur Veranschaulichung der konvexen Flankenform sind mehrere Flankenlinien 22 als punktierte Linien eingezeichnet.

Weiter gilt, dass die Flanken 12, 14, 18, 20 der Zähne 8, 10, 34, 38 einen Krümmungsradius R1, R2 aufweisen, wobei gilt, dass $R = \sqrt{2} * d_m * n$; mit R als als Krümmungsradius R1 der konkaven Flanke 12, 14 oder als Krümmungsradius R2 der konvexen Flanke 18, 20, mit $d_m$ als mittlerem Teilkreisdurchmesser $d_{m1}$ des ersten Kegelrads 4 oder als mittlerem Teilkreisdurchmesser $d_{m2}$ des zweiten Kegelrads 6 und mit n = {1; 2; 3; 4; 5; 6}.

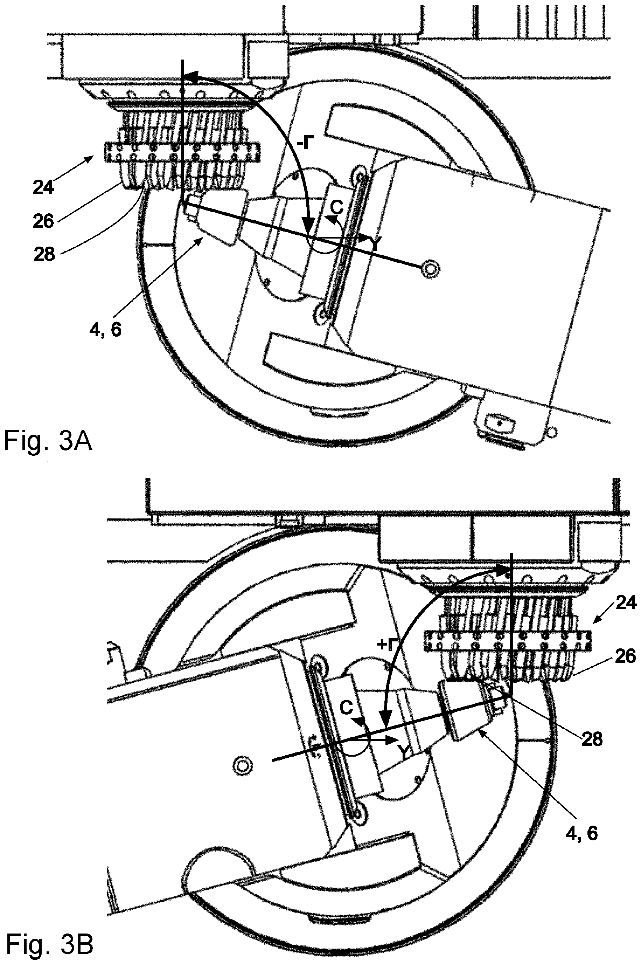

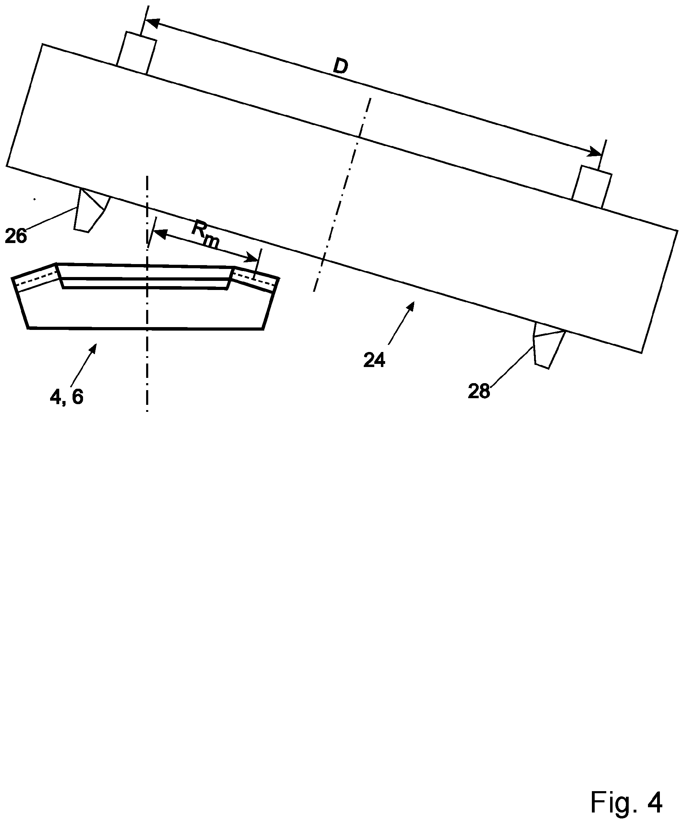

Das erste Kegelrad 4 ist einzelteilend mit einem Stabmesserkopf 24 hergestellt worden, wobei die beiden Flanken 14, 16 eines jeweiligen bikonkaven Zahns 8 des ersten Kegelrads 4 mit Außenschneiden 26 des Stabmesserkopfs 24 hergestellt worden sind (vgl. Fig. 3A, 3B, Fig. 4).

Das zweite Kegelrad 6 ist einzelteilend mit dem Stabmesserkopf 24 hergestellt worden, wobei die beiden Flanken 18, 20 eines jeweiligen bikonvexen Zahns 10 des zweiten Kegelrads 6 mit Innenschneiden 28 des Stabmesserkopfs 24 hergestellt worden sind. Das erste Kegelrad 4 und das zweite Kegelrad 6 sind demnach mit demselben Messerkopf 24 hergestellt worden (vgl. Fig. 3A, 3B, Fig. 4).

Der Stabmesserkopf 24 weist einen Durchmesser D auf, der wenigstens dem Vierfachen, dem Sechsfachen oder dem Achtfachen einer mittleren Teilkegellänge $R_m$ des ersten Kegelrads 4 und des zweiten Kegelrads 6 entspricht, insbesondere höchstens dem Zwölffachen der mittleren Teilkegellänge $R_m$ des ersten Kegelrads 4 und des zweiten Kegelrads 6 entspricht.

Weiter gilt für den Durchmesser das Stabmesserkopfs, dass $D = 2 * \sqrt{2} * d_m * n;$ mit D als Durchmesser des Werkzeugs, mit $d_m$ als mittlerem Teilkreisdurchmesser des ersten Kegelrads 4 oder des zweiten Kegelrads 6 und mit n = {1; 2; 3; 4; 5; 6}.

In den Figuren vgl. Fig. 3A, 3B, Fig. 4 ist das betreffende Werkstück exemplarisch mit 4 und 6 bezeichnet worden, stellvertretend für eines der Kegelräder 4 oder 6.

Aus dem Figuren 3A und 3B ist zu entnehmen, dass erste Maschineneinstellungen (Fig. 3A) beispielsweise zum Herstellen erster konkaver Flanken (Linksflanken) eines Kegelrads 4 verwendet werden, während zweite Maschineneinstellungen zum Herstellen zweiter konkaver Flanken (Rechtsflanken) des Kegelrads 4 verwendet werden. Die Maschineneinstellungen gemäß Fig. 3A und 3B können als gespiegelte Maschineneinstellungen bezeichnet werden, da sich im Wesentlichen das Vorzeichen des C-Achs-Schwenkwinkels von -Γ zu +Γ ändert, wobei die C-Achse die Schwenkachse des Stabmesserkopfs 24 senkrecht zur Zeichnungsebene der Figuren 3A und 3B ist. Wie den Figuren zu entnehmen, unterscheiden sich die Maschineneinstellungen zudem in der Y-Position des Stabmesserkopfs 24 und des Kegelrads 4, 6.

Die Laufverzahnung 2 hat ein positives Verdrehflankenspiel.

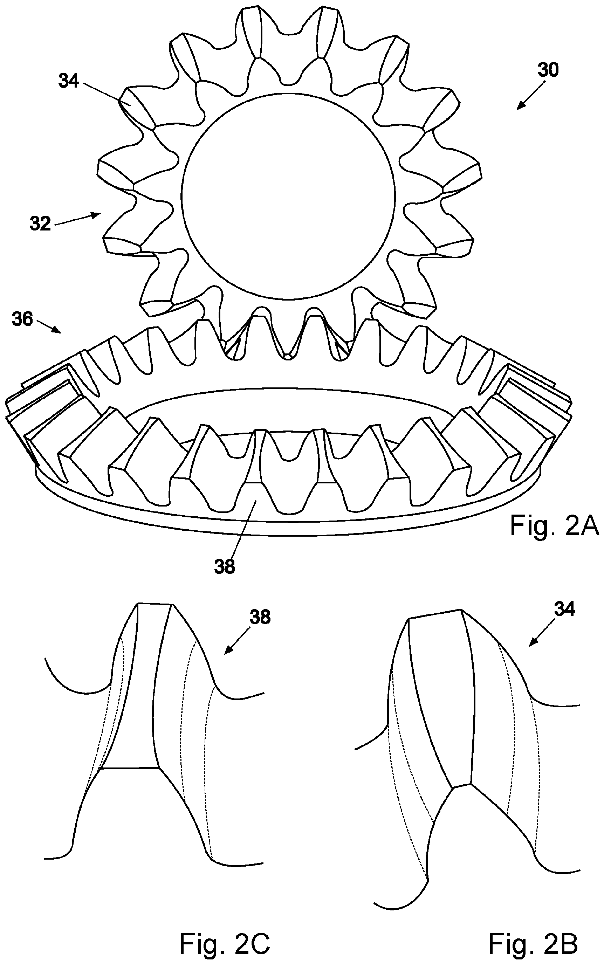

Fig. 2A zeigt eine weitere Laufverzahnung 30, hergestellt nach dem erfindungsgemäßen Verfahren zum Herstellen einer Laufverzahnung, wobei zur Vermeidung von Wiederholungen lediglich auch die Unterschiede zur Laufverzahnung 2 eingegangen wird. Die Laufverzahnung 30 unterscheidet sich dadurch von der Laufverzahnung 2, das ein Ritzel 32 ein zweites Kegelrad 32 mit bikonvexen Zähnen 34 ist und ein Tellerrad 36 ein erstes Kegelrad 36 mit bikonkaven Zähnen 38 ist.

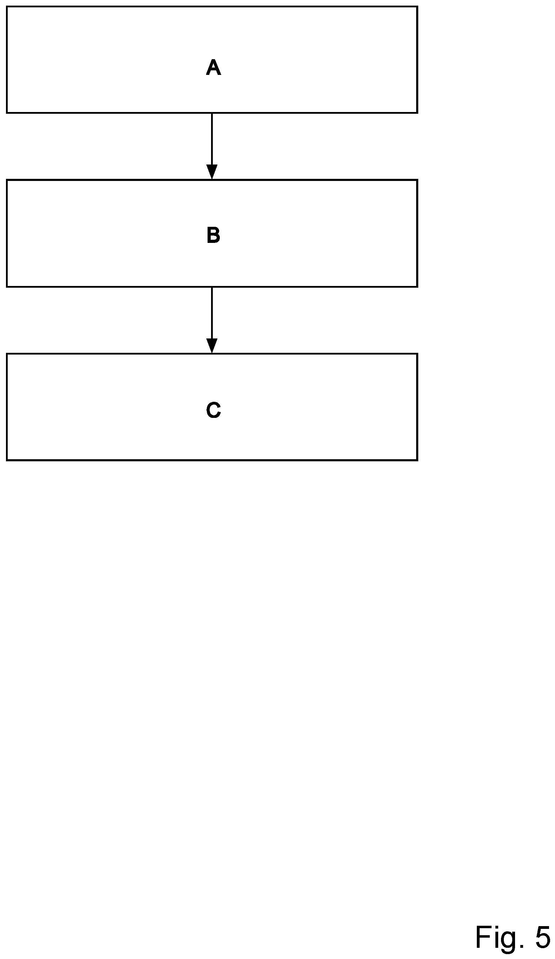

Fig. 5 zeigt ein Ablaufdiagramm eines erfindungsgemäßen Verfahrens zum Herstellen eines Kegelrads, mit den Verfahrensschritten:

A) Bereitstellen eines Stabmesserkopfs 24 zum Verzahnen eines Kegelradwerkstücks;

B) Bereitstellen eines Kegelradwerkstücks, insbesondere eines unverzahnten Kegelradrohlings;

C) Drehantreiben des Stabmesserkopfs 24 und Zustellen des Stabmesserkopfs zum spanabhebenden Herstellen von Zähnen 8, 10, 34, 38 an dem Kegelradwerkstück, wobei der Stabmesserkopf 24 Außenschneiden 26 aufweist und wobei mittels der Außenschneiden 26 des Messerkopfs 24 bikonkave Zähne 8, 38 am dem Kegelradwerkstück hergestellt werden oder wobei der Stabmesserkopf Innenschneiden 28 aufweist und wobei mittels der Innenschneiden 28 des Messerkopfs 24 bikonvexe Zähne (10, 34) an dem Kegelradwerkstück hergestellt werden.

Das Verfahren ist demnach zum Herstellen eine Kegelrads 4, 6, 32, 36 einer Laufverzahnung (2, 30) eingerichtet.

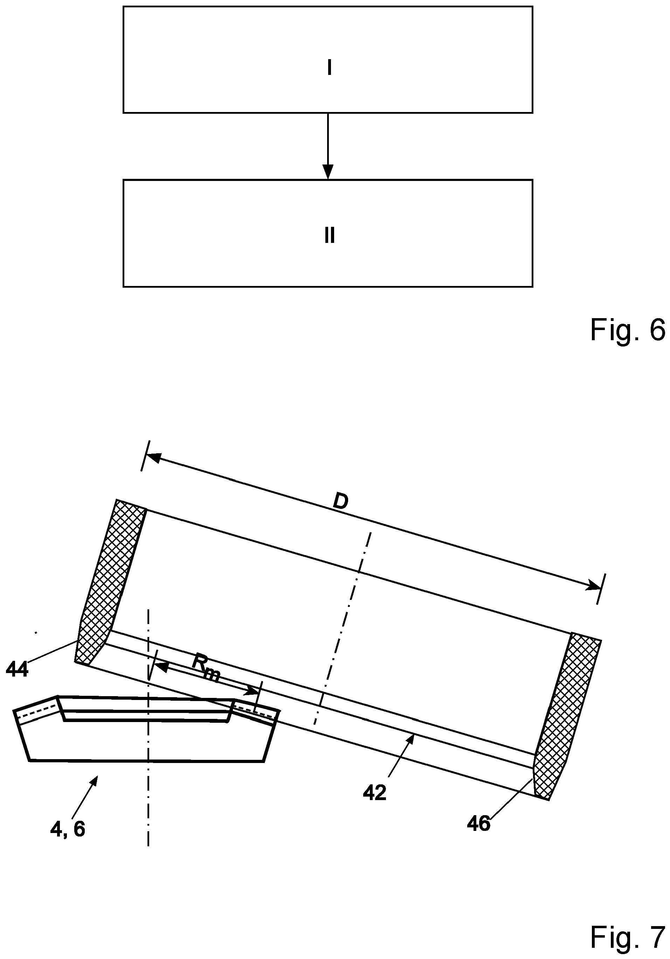

Fig. 6 zeigt ein Ablaufdiagramm eines erfindungsgemäßen Verfahrens zum Herstellen einer Laufverzahnung 2, 30, wobei die Laufverzahnung 2, 30 ein erstes Kegelrad 4, 36 und ein zweites Kegelrad 6, 32 aufweist, und wobei Zähne 8, 38 des ersten Kegelrads 4, 36 eine bikonkave Form haben und Zähne 10, 34 des zweiten Kegelrads 6, 32 eine bikonvexe Form haben, mit den Verfahrensschritten:

I) Herstellen des ersten Kegelrads 4, 36 durch

- Bereitstellen eines Stabmesserkopfs 24 zum Verzahnen eines Kegelradwerkstücks;
- Bereitstellen eines ersten Kegelradwerkstücks, insbesondere eines unverzahnten Kegelradrohlings;
- Drehantreiben des Stabmesserkopfs 24 und Zustellen des Stabmesserkopfs zum spanabhebenden Herstellen von Zähnen an dem ersten Kegelradwerkstück,
- wobei der Stabmesserkopf 24 Außenschneiden 26 aufweist und wobei mittels der Außenschneiden 26 des Stabmesserkopfs 24 bikonkave Zähne 8, 38 am dem ersten Kegelradwerkstück hergestellt werden; und

II) Herstellen des zweiten Kegelrads 6, 32 durch

- Bereitstellen eines Stabmesserkopfs 24 zum Verzahnen eines Kegelradwerkstücks;
- Bereitstellen eines zweiten Kegelradwerkstücks, insbesondere eines unverzahnten Kegelradrohlings;
- Drehantreiben des Stabmesserkopfs 24 und Zustellen des Stabmesserkopfs 24 zum spanabhebenden Herstellen von Zähnen 10, 34 an dem zweiten Kegelradwerkstück,
- wobei der Stabmesserkopf 24 Innenschneiden 28 aufweist und wobei mittels der Innenschneiden 28 des Stabmesserkopfs bikonvexe Zähne 10, 34 an dem zweiten Kegelradwerkstück hergestellt werden.

Alternativ oder ergänzend können die zuvor genannten Verfahren mit einem Schleifwerkzeug 42 gemäß Fig. 7 durchgeführt werden, wobei eine äußere Schleiffläche 44 zur Herstellung der konkaven Flanken dient und eine innere Schleiffläche 46 zur Herstellung der konvexen Flanken eines Kegelrads 4, 6 dienen.

## Patentansprüche

1. Verfahren zum Herstellen eines Kegelrads, mit den Verfahrensschritten:

   - Bereitstellen eines Werkzeugs (24, 42) zum Verzahnen eines Kegelradwerkstücks;
   - Bereitstellen eines Kegelradwerkstücks;
   - Drehantreiben des Werkzeugs (24, 42) und Zustellen des Werkzeugs (24, 42) zum Herstellen von Zähnen (8, 10, 34, 38) an dem Kegelradwerkstück,

      - wobei durch das Werkzeug (24, 42) bikonkave Zähne (8, 38) an dem Kegelradwerkstück hergestellt werden oder
      - wobei durch das Werkzeug (24, 42) bikonvexe Zähne (10, 34) an dem Kegelradwerkstück hergestellt werden.

2. Verfahren nach Anspruch 1,
   **dadurch gekennzeichnet, dass**

   - das Werkzeug (24, 42) ein Stabmesserkopf (24) ist,
   - wobei der Stabmesserkopf (24) Außenschneiden (26) aufweist und wobei mittels der Außenschneiden (26) des Stabmesserkopfs (24) die bikonkaven Zähne (8, 38) an dem Kegelradwerkstück hergestellt werden
   oder
   - wobei der Stabmesserkopf (24) Innenschneiden (28) aufweist und wobei mittels der Innenschneiden (28) des Stabmesserkopfs (24) die bikonvexen Zähne (10, 34) an dem Kegelradwerkstück hergestellt werden.

3. Verfahren nach Anspruch 2,
   **dadurch gekennzeichnet, dass**

   - bikonkave Zähne (8, 38) des Kegelrads (4, 36) ausschließlich mit Außenschneiden (26) des Stabmesserkopfs (24) hergestellt werden oder
   - bikonvexe Zähne (10, 34) des Kegelrads (6, 32) ausschließlich mit Innenschneiden (28) des Stabmesserkopfs (24) hergestellt werden.

4. Verfahren nach einem der voranstehenden Ansprüche 2 oder 3,
   **dadurch gekennzeichnet, dass**

   - das Kegelradwerkstück einzelteilend mit dem Stabmesserkopf (24) bearbeitet wird oder
   - das Kegelradwerkstück kontinuierlich teilend mit dem Stabmesserkopf bearbeitet wird.

5. Verfahren nach einem der voranstehenden Ansprüche,
   **dadurch gekennzeichnet, dass**

   - das Werkzeug (24, 42) ein Schleifwerkzeug (42) ist,
   - wobei das Schleifwerkzeug (42) eine äußere Schleiffläche (44) aufweist und wobei mittels der äußeren Schleiffläche (44) des Schleifwerkzeugs (42) die bikonkaven Zähne (8, 38) an dem Kegelradwerkstück hergestellt werden oder
   - wobei das Schleifwerkzeug (42) eine innere Schleiffläche (46) aufweist und wobei mittels der inneren Schleiffläche (46) des Schleifwerkzeugs (42) die bikonvexen Zähne (8, 38) an dem Kegelradwerkstück hergestellt werden.

6. Verfahren nach einem der voranstehenden Ansprüche,
   **dadurch gekennzeichnet, dass**

   - das Kegelradwerkstück im Semi-Completing Verfahren bearbeitet wird.

7. Verfahren nach einem der voranstehenden Ansprüche,
   **dadurch gekennzeichnet, dass**

   - Flanken (12, 14, 18, 20) der Zähne (8, 10, 34, 38) des Kegelrads (4, 6, 32, 36) einen Krümmungsradius (R1, R2) aufweisen, wobei gilt, dass

   $$R = \sqrt{2} * d_m * n;$$

   - mit R als Krümmungsradius (R1) einer konkaven Flanke (12, 14) oder als Krümmungsradius (R2) einer konvexen Flanke (18, 20),
   - mit $d_m$ als mittlerem Teilkreisdurchmesser ($d_{m1}$, $d_{m2}$) des Kegelrads (4, 6, 32, 36) und
   - mit n = {1; 2; 3; 4; 5; 6}.

8. Verfahren nach einem der voranstehenden Ansprüche,
   **dadurch gekennzeichnet, dass**

   - Flanken (12, 14, 18, 20) der Zähne (8, 10, 34, 38) einen Krümmungsradius (R1, R2) aufweisen, der wenigstens dem Doppelten, dem Dreifachen oder dem Vierfachen einer mittleren Teilkegellänge ($R_m$) des Kegelrads (4, 6, 32, 36) entspricht,
- insbesondere höchstens dem Sechsfachem der mittleren Teilkegellänge ($R_m$) des Kegelrads (4, 6, 32, 36) entspricht.

9.  Verfahren nach einem der voranstehenden Ansprüche,
    **dadurch gekennzeichnet, dass**

    - das Werkzeug (24, 42) zum Herstellen des Kegelrads (4, 6, 32, 36) einen Durchmesser (D) aufweist, wobei gilt, dass

    $$D = 2 * \sqrt{2} * d_m * n;$$

    - mit D als Durchmesser des Werkzeugs (24, 42),
    - mit $d_m$ als mittlerem Teilkreisdurchmesser ($d_{m1}$, $d_{m2}$) des Kegelrads (4, 6, 32, 36) und
    - mit n = {1; 2; 3; 4; 5; 6}.

10. Verfahren nach einem der voranstehenden Ansprüche,
    **dadurch gekennzeichnet, dass**

    - Rechtsflanken (12, 18) der Zähne (8, 10, 34, 38) des Kegelradwerkstücks mit ersten Maschineneinstellungen einer CNC-gesteuerten Werkzeugmaschine (40) gefertigt werden und
    - Linksflanken (14, 20) der Zähne (8, 10, 34, 38) des Kegelradwerkstücks mit zweiten Maschineneinstellungen der CNC-gesteuerten Werkzeugmaschine (40) gefertigt werden
    - wobei sich die ersten Maschineneinstellungen und die zweiten Maschineneinstelllungen insbesondere durch einen Vorzeichenwechsel eines Schwenkwinkels ($\Gamma$) einer Werkzeug- oder Werkstückschwenkachse (C) unterscheiden.

11. Verfahren zum Herstellen einer Laufverzahnung,

    - wobei die Laufverzahnung (2, 30) ein erstes Kegelrad (4, 36) und ein zweites Kegelrad (6, 32) aufweist, und
    - wobei Zähne (8, 38) des ersten Kegelrads (4, 36) eine bikonkave Form haben und Zähne (10, 34) des zweiten Kegelrads (6, 32) eine bikonvexe Form haben,

    mit den Verfahrensschritten:

    - Herstellen des ersten Kegelrads (4, 36) durch

        - Bereitstellen eines Werkzeugs (24, 42) zum Verzahnen eines Kegelradwerkstücks;
        - Bereitstellen eines ersten Kegelradwerkstücks;

        - Drehantreiben des Werkzeugs (24, 42) und Zustellen des Werkzeugs (24, 42) zum Herstellen von Zähnen (8, 38) an dem ersten Kegelradwerkstück, wobei bikonkave Zähne (8, 38) am dem ersten Kegelradwerkstück hergestellt werden; und

    - Herstellen des zweiten Kegelrads (6, 32) durch

        - Bereitstellen eines Werkzeugs (24, 42) zum Verzahnen eines Kegelradwerkstücks;
        - Bereitstellen eines zweiten Kegelradwerkstücks;
        - Drehantreiben des Werkzeugs (24, 42) und Zustellen des Werkzeugs (24, 42) zum Herstellen von Zähnen (10, 34) an dem zweiten Kegelradwerkstück, wobei bikonkave Zähne (10, 34) am dem zweiten Kegelradwerkstück hergestellt werden.

12. Verfahren nach Anspruch 11,
    **dadurch gekennzeichnet, dass**

    - das erste Kegelrad (4, 36) und das zweite Kegelrad (6, 32) mit dem gleichen Werkzeug (24, 42) hergestellt werden,
    - insbesondere mit demselben Werkzeug (24, 42) hergestellt werden.

13. Verfahren nach Anspruch 11 oder Anspruch 12,
    **dadurch gekennzeichnet, dass**

    - die Laufverzahnung ein positives Verdrehflankenspiel aufweist.

14. Verfahren nach einem der Ansprüche 11 bis 13,
    **dadurch gekennzeichnet, dass**

    - das erste Kegelrad (4, 36) und das zweite Kegelrad (6, 32) gemäß einem Verfahren nach einem der Ansprüche 1 bis 10 hergestellt werden.

Fig. 1A

Fig. 1C

Fig. 1B

34

30

32

36

38

Fig. 2A

38

34

Fig. 2C

Fig. 2B

Fig. 3A

Fig. 3B

Fig. 4

```
┌─────────────────────────────────┐
│                                 │
│                                 │
│               A                 │
│                                 │
│                                 │
└─────────────────────────────────┘
                 │
                 ▼
┌─────────────────────────────────┐
│                                 │
│                                 │
│               B                 │
│                                 │
│                                 │
└─────────────────────────────────┘
                 │
                 ▼
┌─────────────────────────────────┐
│                                 │
│                                 │
│               C                 │
│                                 │
│                                 │
└─────────────────────────────────┘
```

Fig. 5

EP 3 858 528 A1

I

II

Fig. 6

D

Rm

44

42

46

4, 6

Fig. 7

16

**Europäisches Patentamt**
**European Patent Office**
**Office européen des brevets**

# EUROPÄISCHER RECHERCHENBERICHT

**Nummer der Anmeldung**

EP 20 15 4642

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 1 083 189 A (COLLEGE OF MECHANICAL ENGINEER [CN]) 2. März 1994 (1994-03-02) | 1-5,7,8, 10-14 | INV. B23F9/02 |
| Y | * letzter Absatz; Abbildungen | 6 | B23F9/10 |
| A | 1,5,7,8,9,14,15 * | 9 | B23F17/00 |
| | ----- | | B23F19/00 |
| X | GB 867 022 A (MEINHART HARBECK) 3. Mai 1961 (1961-05-03) | 1-4,6-10 | B23F15/00 F16H55/08 |
| A | * Seite 1, Zeile 9 - Zeile 11 * * Seite 1, Zeile 60 - Zeile 75 * * Seite 3, Zeile 114 - Seite 4, Zeile 6; Abbildungen 9-16 * | 11-14 | ADD. B23F21/02 B23F21/22 |
| | ----- | | |
| X | GB 154 184 A (SKF SVENSKA KULLAGERFAB AB) 8. Dezember 1921 (1921-12-08) * Seite 1, Zeile 26 - Zeile 33; Abbildungen 2-4 * * Seite 2, Zeile 42 - Zeile 76 * | 1,5,11, 14 | |
| | ----- | | |
| Y | EP 3 287 222 A1 (KLINGELNBERG AG [CH]) 28. Februar 2018 (2018-02-28) | 6 | |
| A | * Anspruch 1 * | 2 | RECHERCHIERTE SACHGEBIETE (IPC) |
| | ----- | | |
| A | US 2 787 939 A (ERNEST WILDHABER) 9. April 1957 (1957-04-09) * Abbildungen 1-4 * | 1-5,11 | B23F F16H |
| | ----- | | |
| A | US 2005/130785 A1 (KONDA MASAHIRO [JP]) 16. Juni 2005 (2005-06-16) * Absatz [0032] * | 1,11 | |
| | ----- | | |
| A | SU 944 824 A1 (NOVOPOLOTSKIJ POLT INST [SU]) 23. Juli 1982 (1982-07-23) * Abbildung 1 * | 1 | |
| | ----- | | |
| A | US 3 986 305 A (GUNTER ERWIN J) 19. Oktober 1976 (1976-10-19) * Abbildung 4 * | 1 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 10. Juli 2020 | Carmichael, Guy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 20 15 4642

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 647 459 A1 (KLINGELNBERG AG [CH]) 9. Oktober 2013 (2013-10-09) * Absatz [0031] * ----- | 5 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 10. Juli 2020 | Carmichael, Guy |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**EP 3 858 528 A1**

**ANHANG ZUM EUROPÄISCHEN RECHERCHENBERICHT
ÜBER DIE EUROPÄISCHE PATENTANMELDUNG NR.**

EP 20 15 4642

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-07-2020

| Im Recherchenbericht angeführtes Patentdokument | | Datum der Veröffentlichung | Mitglied(er) der Patentfamilie | | Datum der Veröffentlichung |
|---|---|---|---|---|---|
| CN 1083189 | A | 02-03-1994 | KEINE | | |
| GB 867022 | A | 03-05-1961 | KEINE | | |
| GB 154184 | A | 08-12-1921 | FR | 527211 A | 22-10-1921 |
| | | | GB | 154184 A | 08-12-1921 |
| EP 3287222 | A1 | 28-02-2018 | CN | 107755827 A | 06-03-2018 |
| | | | EP | 3287222 A1 | 28-02-2018 |
| | | | JP | 2018051753 A | 05-04-2018 |
| | | | US | 2018056417 A1 | 01-03-2018 |
| US 2787939 | A | 09-04-1957 | DE | 1037234 B | 21-08-1958 |
| | | | GB | 775398 A | 22-05-1957 |
| | | | US | 2787939 A | 09-04-1957 |
| US 2005130785 | A1 | 16-06-2005 | JP | 2005121106 A | 12-05-2005 |
| | | | US | 2005130785 A1 | 16-06-2005 |
| SU 944824 | A1 | 23-07-1982 | KEINE | | |
| US 3986305 | A | 19-10-1976 | KEINE | | |
| EP 2647459 | A1 | 09-10-2013 | CN | 103358208 A | 23-10-2013 |
| | | | EP | 2647459 A1 | 09-10-2013 |
| | | | JP | 6110705 B2 | 05-04-2017 |
| | | | JP | 2013212577 A | 17-10-2013 |
| | | | KR | 20130112002 A | 11-10-2013 |
| | | | US | 2013260643 A1 | 03-10-2013 |

EPO FORM P0461

Für nähere Einzelheiten zu diesem Anhang : siehe Amtsblatt des Europäischen Patentamts, Nr.12/82